# EUROPÄISCHE PATENTSCHRIFT

(11) **EP 3 360 728 B1**
(45) Veröffentlichungstag und Bekanntmachung des Hinweises auf die Patenterteilung: **14.04.2021**
(21) Anmeldenummer: 18401000.7
(22) Anmeldetag: 02.01.2018
(51) Int. Cl.: B60N 2/888, B60N 2/874, B60N 2/80

(54) **KOPFSTÜTZE**
HEADREST
APPUIE-TÊTE

(30) Priorität: 08.02.2017 DE 102017001149
(43) Veröffentlichungstag der Anmeldung: 15.08.2018
(73) Patentinhaber: GRAMMER AG, 92289 Ursensollen (DE)
(72) Erfinder: Nuss, Ralph, 92284 Poppenricht (DE); Schlierf, Manfred, 92224 Amberg (DE); Delling, Gerhard, 92546 Schmidgaden (DE)
(74) Vertreter: Roche, von Westernhagen & Ehresmann

(56) Entgegenhaltungen:
- EP-A1- 0 303 145
- DE-A1-102015 206 956
- DE-B3-102014 001 980

## Beschreibung

Die Erfindung betrifft eine Kopfstütze, insbesondere eine Kopfstütze für einen Fahrzeugsitz.

Die Kopfstütze umfasst ein Kopfteil, welches mittels einer Lagervorrichtung an der Rückenlehne eines Fahrzeugsitzes gehalten ist. Die Lagervorrichtung umfasst eine erste der Rückenlehne zugeordnete Halterung und eine zweite dem Kopfteil zugeordnete Halterung. Das Kopfteil ist mittels der Lagervorrichtung in vertikale Richtung und in horizontale Richtung verstellbar gelagert.

Eine Kopfstütze aus dem Stand der Technik ist in der DE 10 2015 206 956 A1 beschrieben. Die Kopfstütze umfasst ein Kopfanlageteil welches mit zwei Viergelenken an einem Tragstangenbügel gelagert ist. Der Tragstangenbügel ist fest an der Rückenlehne eines Fahrzeugsitzes gehalten. Mit Hilfe des Viergelenks kann das Kopfanlageteil horizontal nach vorne und zurück verstellt werden. An oberen Enden der vertikal verlaufenden Verbindungsglieder des Viergelenks ist ein Kopfstützenelement befestigt, an welchem das Kopfanlageteil vertikal verstellbar geführt ist. Ein Vorderseitenabschnitt des Kopfstützenelements ist dabei vor den Viergelenken angeordnet.

In der DE 87 17 434 U1 ist ein Behandlungsstuhl beschrieben, bei welchem das Kopfanlageteil in ähnlicher Weise wie bei der zuvor erwähnten Druckschrift horizontal und vertikal verstellbar gelagert ist. Der Abstand der oberen und der unteren Gelenke ist bei diesem Stand der Technik unterschiedlich, so dass mit dem Schwenken der Gestengearme ein Schwenken des Kopfanlageteils einhergeht.

In der DE 10 2014 214 897 A1 ist eine Verstellvorrichtung für die Kopfstütze eines Fahrzeugsitzes beschrieben, die ein als Parallelogramm ausgebildetes Viergelenk umfasst.

Die EP 0 303 145 A1 (D1) offenbart eine Kopfstütze, die mit zwei Streben 20, 23 an einem Trägerteil 6 gelagert ist, wobei jede Strebe mit dem Trägerteil 6 ein Schwenkgelenk 22, 24 bildet. Eine Traverse 12, ein Mitnehmer 17 und Kugelbuchsen 11 bilden zusammen ein starres Teil, an welchem die Gestängearme 20 und 23 mittels der Gelenke 21 und 30 angelenkt sind. Bei dem Schwenkvorgang der Streben 20, 23 um die Gelenke 22, 24 ist die Traverse mit den Kugelbuchsen 11 daher mittels des Koppelgetriebes zwangsgeführt. Die Rampe 28 dient der Einstellung der gewünschten Position des Koppelgetriebes, indem die Kopfstütze 7 mit ihren Führungsstangen 10 relativ zu den Kugelbuchsen 11 verlagert und dabei die Kopfstütze mit dem gesammten Viergelenk in eine bestimmte Position gebracht wird. Die Verlagerung erfolgt durch elektrischen Antrieb eines Zahnriemens 14, der mit der Traverse 12 verbunden ist.

Es war Aufgabe der Erfindung eine Kopfstütze mit einem schmalen Kopfanlageteil zu schaffen, welches in der Höhe und in X-Richtung verstellbar ist.

Die Aufgabe wurde gelöst durch eine Kopfstütze mit den Merkmalen des Anspruchs 1.

Die Kopfstütze umfasst ein Kopfanlageteil, welches mittels einer Lagervorrichtung an einem Sitz lagerbar ist. Die Lagervorrichtung umfasst eine Getriebevorrichtung mit einem dem Kopfanlageteil zugeordneten ersten Halteelement sowie einem sitzteilfesten zweiten Halteelement. Das zweite Halteelement ist z.B. fest an der Struktur der Rückenlehne befestigt. Das Kopfanlageteil ist z.B. unmittelbar oder mittelbar mit dem ersten Halteelement verbunden. Das Kopfanlageteil weist z.B. Tragstangen auf, die in dem ersten Halteelement verstellbar, insbesondere höhenverstellbar, oder fest gelagert sind.

Das erste Halteelement und das zweite Halteelement sind derart durch Lenker miteinander verbunden, dass wenigstens ein Viergelenk gebildet ist. Das erste Halteelement ist auf diese Weise relativ zu dem zweiten Halteelement zwischen einer hinteren Position und einer vorderen Position bewegbar, wobei es zwangsgeführt ist. Weil das Kopfanlageteil mit dem ersten Halteelement verbunden ist, kann es relativ zu dem Fahrzeugsitz zwischen einer zu dem Kopf eines Sitzinsassen nach vorne bewegten vorderen Position und einer von dem Kopf weg bewegten hinteren Position bewegt werden.

Einer Ausführungsform gemäß umfasst jedes Viergelenk einen ersten Lenker und einen zweiten Lenker, wobei jeder Lenker mit dem ersten Halteelement und mit dem zweiten Halteelement ein Gelenk bildet. Die Lenker erstrecken sich z.B. im Wesentlichen vertikal zwischen dem ersten Halteelement und dem zweiten Halteelement. Ein Lenker ist im Sinne der Erfindung eine biegesteife Strebe, die Teil des Koppelgetriebes ist, welches das Viergelenk bildet.

Gemäß einer besonderen Ausgestaltung der Erfindung ist das Viergelenk als Trapezviergelenk ausgebildet. In diesem Fall ist der Abstand der beiden an dem ersten Halteelement ausgebildeten Gelenke unterschiedlich von dem Abstand der an dem zweiten Halteelement ausgebildeten Gelenke.

Eine besondere Ausführungsform des Trapezviergelenks zeichnet sich dadurch aus, dass der Abstand von zwei an dem ersten Halteelement ausgebildeten Gelenken größer ist als der Abstand von zwei an dem zweiten Halteelement ausgebildeten Gelenken. Mit diesen Merkmalen wird erreicht, dass das erste Halteelement bei der Bewegung der Getriebevorrichtung zwischen der vorderen Position und der hinteren Position eine Schwenkbewegung und damit eine Bewegung in Längsrichtung durchführt.

Die Getriebevorrichtung schwenkt um eine veränderliche Momentandrehachse. Die Momentandrehachse wird durch den Schnittpunkt von Mittellinien durch die oberen und unteren Gelenke jedes Lenkers gebildet. Mit anderen Worten kann die Momentandrehachse konstruiert werden, indem die Lagerpunkte jedes Lenkers mit einer Linie verbunden und nach unten bis zu einem Schnittpunkt verlängert werden und die Schnittpunkte beider Viergelenke miteinander verbunden werden. Durch diese Anordnung ist eine besonders schmale Bauform möglich, da das erste Halteelement bzw. eine evtl. vorhandene Höhenverstellvorrichtung innerhalb der Viergelenkmechanik taumelt. Wenn die Lagervorrichtung Tragstangen umfasst, ragt ein unteres Ende der Tragstangen z.B. nicht nach vorne oder nach hinten über das Viergelenk hinaus.

Eine Ausführungsform ist dadurch gekennzeichnet, dass das erste Halteelement und das zweite Halteelement Teil eines ersten Viergelenks sowie eines zweiten Viergelenks sind. Um die Stabilität zu erhöhen, können das erste Halteelement und das zweite Halteelement z.B. beidseitig mit jeweils zwei Lenkern miteinander verbunden sein. Die Lenker sind z.B. auf beiden Seiten parallel angeordnet. Die Lagervorrichtung umfasst dann zwei Viergelenke mit denen das erste Halteelement und damit auch das Kopfanlageteil stabil geführt werden.

Die Getriebevorrichtung umfasst z.B. einen elektrischen Antrieb, mit welchem die Getriebevorrichtung zwischen der hinteren Position und der vorderen Position bewegbar ist. Bei Verwendung des elektrischen Antriebes kann die Getriebevorrichtung mit einer nachfolgend beschriebenen Verriegelungsvorrichtung in unterschiedlichen Positionen verriegelt werden. Alternativ kann der elektrische Antrieb selbsthemmend sein, so dass eine zusätzliche Verriegelung nicht notwendig ist. Die Getriebevorrichtung verbleibt dann aufgrund der Selbshemmung in der von dem elektrischen Antrieb jeweils eingestellten Position.

Gemäß einer Ausführungsform umfasst die Getriebevorrichtung eine Verriegelungsvorrichtung, mittels welcher das erste Halteelement bei der Bewegung zwischen der vorderen Position und der hinteren Position in unterschielichen Positionen verriegelbar ist. Die Verriegelungsvorrichtung umfasst z.B. erste Verriegelungsmittel, die dem ersten Halteelement zugeordnet sind und zweite Verriegelungsmittel, die dem zweiten Halteelement zugeordnet sind. Die ersten Verriegelungsmittel und die zweiten Verriegelungsmittel können lösbar in Eingriff gebracht werden. Wenn die Verriegelungsmittel in einer Riegelposition in Eingriff stehen, ist das erste Halteelement, und damit das Kopfanlageteil, nicht zwischen der vorderen und der hinteren Position bewegbar. Stehen sie in einer Löseposition außer Eingriff, ist das erste Halteelement zwischen der hinteren und der vorderen Position bewegbar. Um die Verriegelungsvorrichtung zwischen der Riegelposition und der Löseposition zu bewegen sind die ersten Verriegelungsmittel und / oder die zweiten Verriegelungsmittel bewegbar ausgebildet.

Die zweiten Verriegeiungsmittel ragen z.B. soweit in Richtung der ersten Verriegelungsmittel, dass man günstige Hebel- sowie Wegverhältnisse erhält, um die Verriegelungsmittel zwischen der Riegelposition und der Löseposition zu bewegen. Die zweiten Verriegelungsmittel sind z.B. derart ausgebildet, dass sie in keiner der Positionen der Getriebevorrichtung aus dieser herausragen.

Die Lagervorrichtung umfasst eine Höhenverstellvorrichtung, mittels welcher das Kopfanlageteil relativ zu dem Fahrzeugsitz zwischen einer oberen Position und einer unteren Position bewegbar ist. Die Kopfstütze kann eine Höhenverstellvorrichtung optional aufweisen, d.h. gemäß einer Ausführungsvariante kann die Kopfstütze ohne Höhenverstellvorrichtung und gemäß einer anderen Ausführungsvariante mit Höhenverstellvorrichtung ausgebildet sein.

Die Höhenverstellvorrichtung umfasst wenigstens eine mit dem Kopfanlageteil verbundene Tragstange und wenigstens eine dem ersten Halteelement zugeordnete Führung für die Lagerung und Führung der Tragstange. Alternativ können anstelle von Tragstangen aber auch andere Führungen, wie z.B. die Führung des Kopfanlageteils an einem rückenlehnenfesten Blech, einer Kugelführung oder einer Gleitschienenführung eingesetzt werden. Die Führung ist z.B. von einer Linearführung oder einer Bogenführung gebildet, in welcher das Kopfanlageteil geführt ist.

Die Tragstange ist fest mit dem Kopfanlageteil verbunden. Z.B. sind zwei Tragstangen mit dem Kopfanlageteil verbunden. Für jede Tragstange ist eine Führung vorgesehen, die dem ersten Halteelement zugeordnet ist. Die Führung ist z.B. in dem ersten Halteelement ausgebildet. Z.B. ist in dem ersten Halteelement wenigstens eine Aussparung ausgebildet, in der die Tragstange geführt ist. Alternativ ist die Führung z.B. an dem ersten Halteelement befestigt.

Die Höhenverstellvorrichtung kann z.B. einen elektrischen Antrieb umfassen, so dass die Bewegung der Tragstangen mit dem Kopfanlageteil durch den Antrieb erfolgt. Auch bei Verwendung des elektrischen Antriebes können die Tragstangen mit einer nachfolgend beschriebenen Arretiervorrichtung in unterschiedlichen Höhenpositionen arretiert werden. Alternativ kann der elektrische Antrieb selbsthemmend sein, so dass eine zusätzliche Arretierung überflüssig ist. Die Tragstange verbleibt dann in der von dem elektrischen Antrieb jeweils eingestellten Position.

Eine Ausführungsform ist dadurch gekennzeichnet, dass eine Arretiervorrichtung vorgesehen ist, mittels welcher das Kopfanlageteil relativ zu dem Fahrzeugsitz, insbesondere relativ zu dem ersten Halteteil, in unterschiedlichen Höhenpositionen arretierbar ist. Die Arretiervorrichtung umfasst z.B. erste dem ersten Halteelement zugeordnete Arretiermittel und zweite der Tragstange zugeordnete Arretiermittel. In einer Arretierposition stehen die Arretiermittel in Eingriff und die Bewegung der Tragstange ist in wenigstens eine Richtung nicht möglich. In der Arretierposition kann z.B. die Bewegung der Tragstange in beide Richtungen nicht möglich sein. In einer Verstellposition ist die Bewegung der Tragstange in beide Bewegungsrichtungen möglich.

Weitere Vorteile ergeben sich anhand eines in den Fig. schematisch dargestellten Ausführungsbeispiels. Es zeigen:
Fig. 1 eine perspektivische Ansicht der Kopfstütze einschließlich einer Lagervorrichtung, wobei eine Getriebevorrichtung in einer mittleren Position und eine Höhenverstellvorrichtung in einer unteren Position angeordnet ist,
Fig. 2 in Anlehnung an Fig. 1 die Kopfstütze, wobei die Getriebevorrichtung in einer vorderen Position angeordnet ist,
Fig. 3 die Kopfstütze in Anlehnung an Fig. 1, wobei die Höhenverstellvorrichtung in einer oberen Position angeordnet ist,
Fig. 4 die Kopfstütze in Anlehnung an Fig. 2, wobei die Höhenverstellvorrichtung in einer oberen Position angeordnet ist,
Fig. 5 eine Frontansicht der Kopfstütze gemäß Ansichtspfeil V in Fig. 3, wobei sich die Getriebevorrichtung in der mittleren Position und die Höhenverstellvorrichtung in der oberen Position befindet,
Fig. 6 eine Schnittansicht gemäß Schnittlinie VI - VI in Fig. 5,
Fig. 7 eine Schnittansicht gemäß Schnittlinie VII - VII in Fig. 5,
Fig. 8 in Anlehnung an Fig. 6, die Kopfstütze in der vorderen Position der Getriebevorrichtung,
Fig. 9 in Anlehnung an Fig. 7, die Kopfstütze in der vorderen Position der Getriebevorrichtung,
Fig. 10 eine Seitenansicht der Kopfstütze, wobei die Getriebevorrichtung in einer hinteren Position, der mittleren Position und der vorderen Position dargestellt ist, wobei die Höhenverstellvorrichtung in jeder der erwähnten Positionen der Getriebevorrichtung in einer oberen und einer unteren Position gezeigt ist,
Fig. 11 eine Seitenansicht der Lagervorrichtung, wobei die Getriebevorrichtung der Kopfstütze in der mittleren Position und wobei die Tragstangen in der unteren Position angeordnet sind,
Fig. 12 die Lagervorrichtung in Anlehnung an Fig. 11, wobei die Getriebevorrichtung in der vorderen Position angeordnet ist,
Fig. 13 eine perspektivische Ansicht der Kopfstütze mit Lagervorrichtung, wobei sich die Getriebevorrichtung in der vorderen Position befindet, wobei die Halteelemente nicht dargestellt sind und wobei verdeckte Linien gezeigt sind.

Die Kopfstütze insgesamt ist in den Fig. mit dem Bezugszeichen 10 bezeichnet. Gleiche Bezugszeichen in den unterschiedlichen Fig. bezeichnen entsprechende Teile, auch wenn kleine Buchstaben nachgestellt oder weggelassen sind.

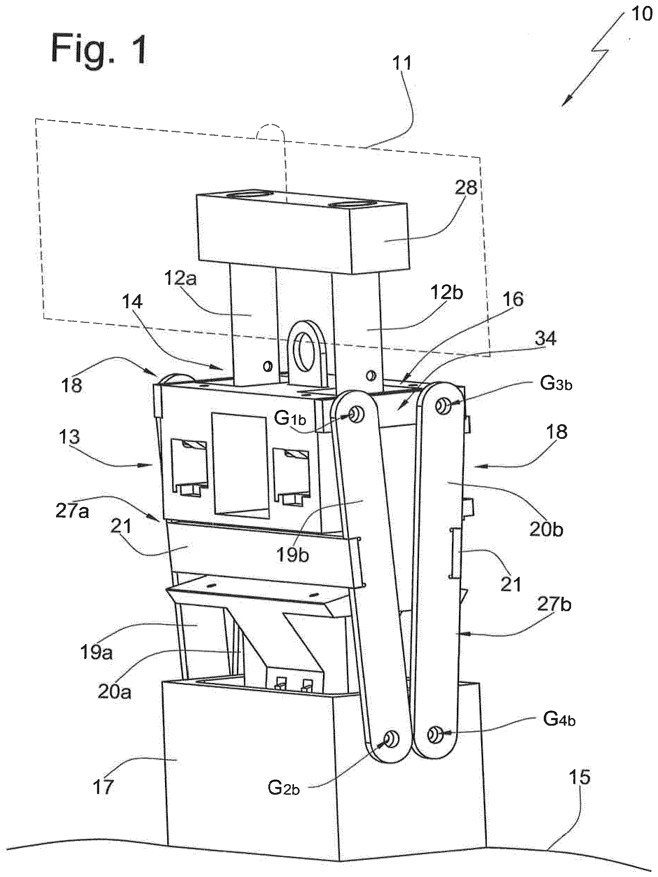

Die Kopfstütze 10 umfasst ein Kopfanlageteil 11, welches lediglich in Fig. 1 durch eine gestrichelte Linie schematisch dargestellt ist und in den übrigen Fig. durch einen Verbindungsbereich 28, der Teil des Kopfanlageteils 11 ist, angedeutet ist. Der Verbindungsbereich 28 des Kopfanlageteils 11 ist mit Tragstangen 12a und 12b fest verbunden. Die Tragstangen 12a und 12b sind Teil einer Lagervorrichtung 13, mit welcher das Kopfanlageteil 11 relativ zu einem Fahrzeugsitz 15 in die Richtungen x1 und x2 sowie in die Richtungen z1 und z2 bewegbar gelagert ist, wie z.B. in den Fig. 1 bis 4 erkennbar. Die Richtungen x1 und x2 sind parallel zu einer x-Achse und die Richtungen z1 und z2 sind parallel zu einer z-Achse eines im Raum feststehenden Koordinatensystems aus x-Achse, y-Achse und z-Achse.

Die Lagervorrichtung 13 umfasst eine Höhenverstellvorrichtung 14 sowie eine Getriebevorrichtung 18. Die Getriebevorrichtung 18 umfasst ein erstes Halteelement 16 sowie ein zweites Halteelement 17. Das zweite Halteelement 17 ist fest mit der Rückenlehne des Fahrzeugsitzes 15 verbunden. Das erste Halteelement 16 sowie das zweite Halteelement 17 sind Teil von zwei Viergelenken 27a und 27b, die an gegenüberliegenden Seitenbereichen des ersten Halteelements 16 und des zweiten Halteelements 17 ausgebildet sind.

Das Viergelenk 27a umfasst vertikal verlaufende Lenker 19a und 20a und das Viergelenk 27b umfasst Lenker 19b und 20b. Die Lenker 19a und 19b sowie die Lenker 20a und 20b sind zur Stabilisierung mit Querstreben 21 miteinander verbunden. Die Querstreben 21 sind fest an den Lenkern 19a und 19b bzw. an den Lenkern 20a und 20b befestigt.

Der Lenker 19a bildet mit dem ersten Halteelement 16 ein Gelenk G1a und mit dem zweiten Halteelement 17 ein Gelenk G2a. Der Lenker 20a bildet mit dem ersten Halteelement 16 ein Gelenk G3a und mit dem zweiten Halteelement 17 ein Gelenk G4a. In gleicher Weise bildet der Lenker 19b mit dem ersten Halteelement 16 ein Gelenk G1b und mit dem zweiten Halteelement 17 ein Gelenk G2b. Der Lenker 20b bildet mit dem ersten Halteelement 16 ein Gelenk G3b und mit dem zweiten Halteelement 17 ein Gelenk G4b.

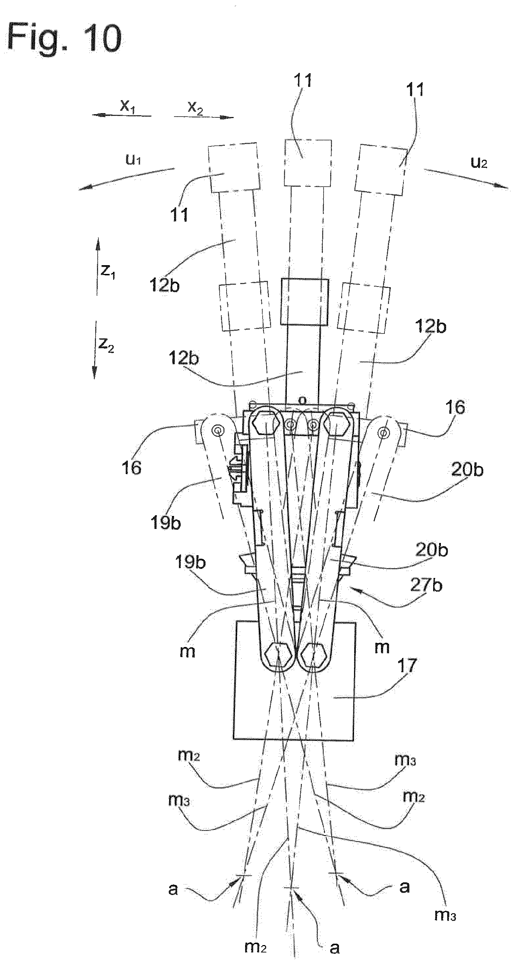

Die Gelenke G1a, G3a, G1b und G3b sind z.B. an einem oberen Endbereich 34 des Halteelements 16 angeordnet. Auf diese Weise ist mittels der Getriebevorrichtung 18 das erste Halteelement 16 - unabhängig von der Höhenposition des Kopfanlageteils 11 bzw. der Position der Tragstangen 12a und 12b - relativ zu dem zweiten Halteelement 17 zwischen einer hinteren Position und einer vorderen Position bewegbar (siehe z. B. Fig. 10).

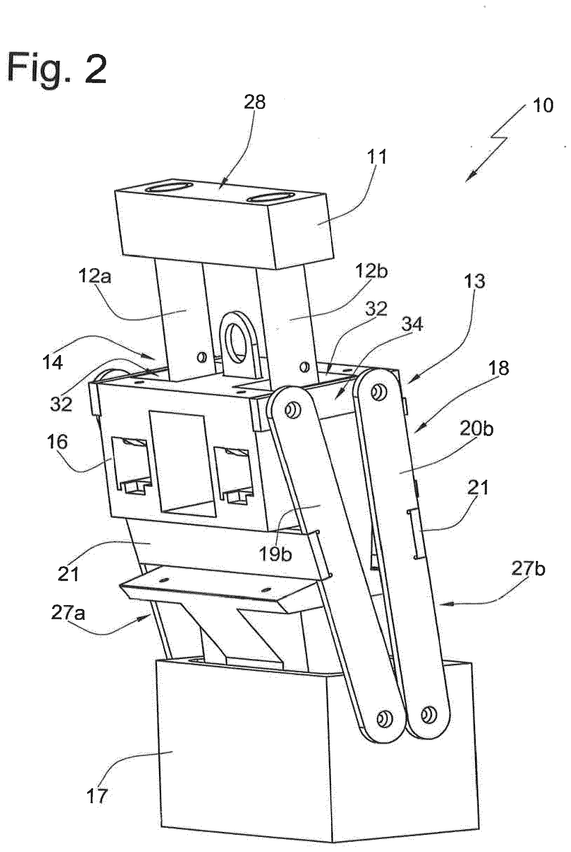

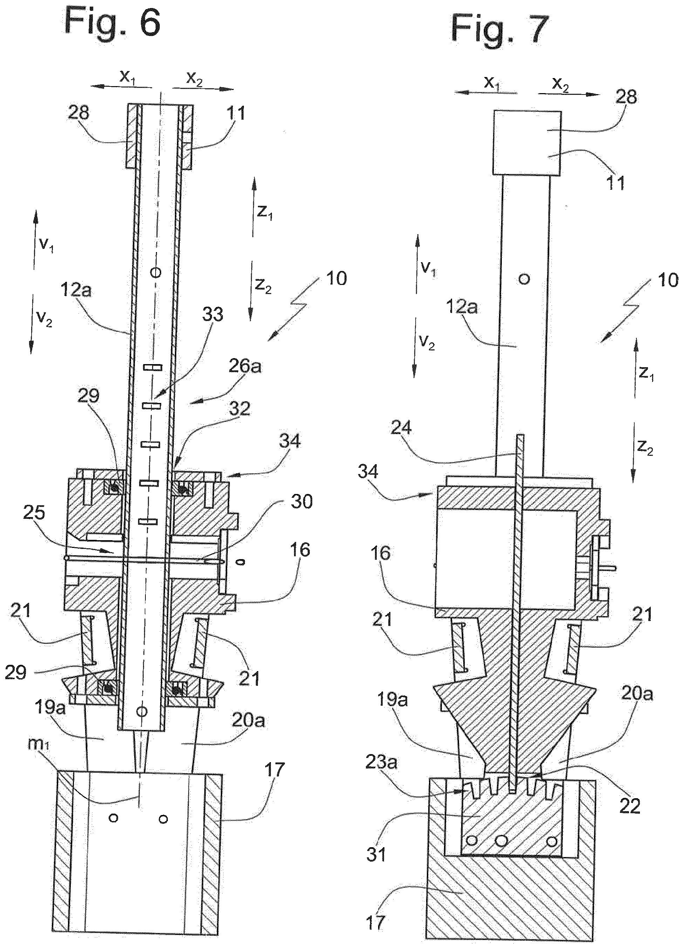

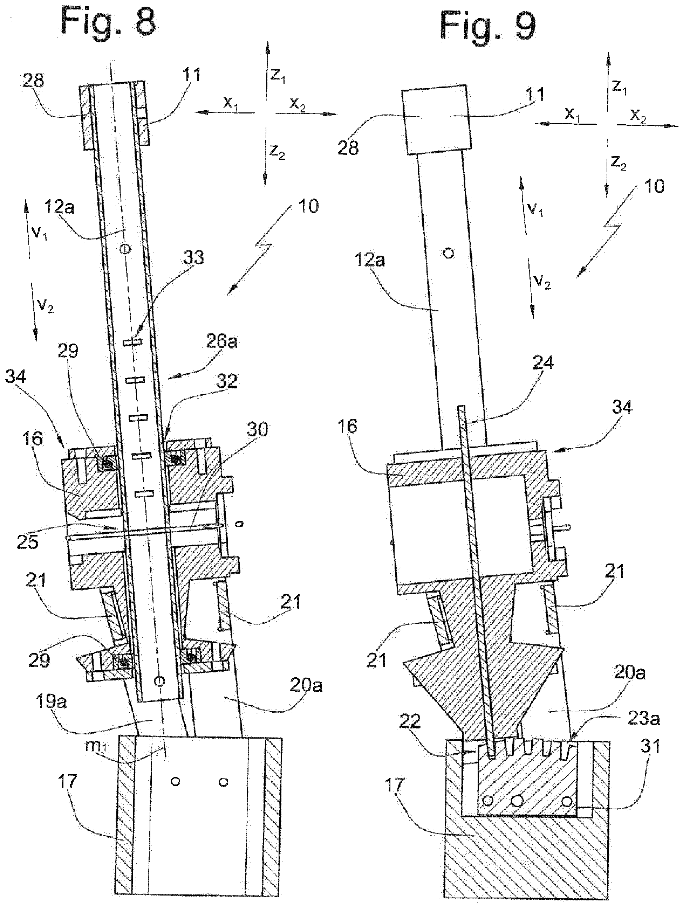

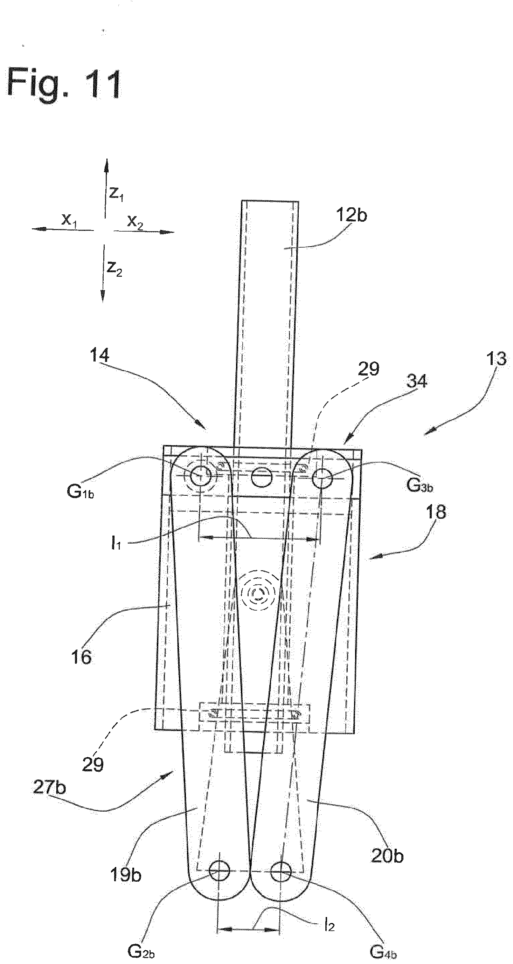

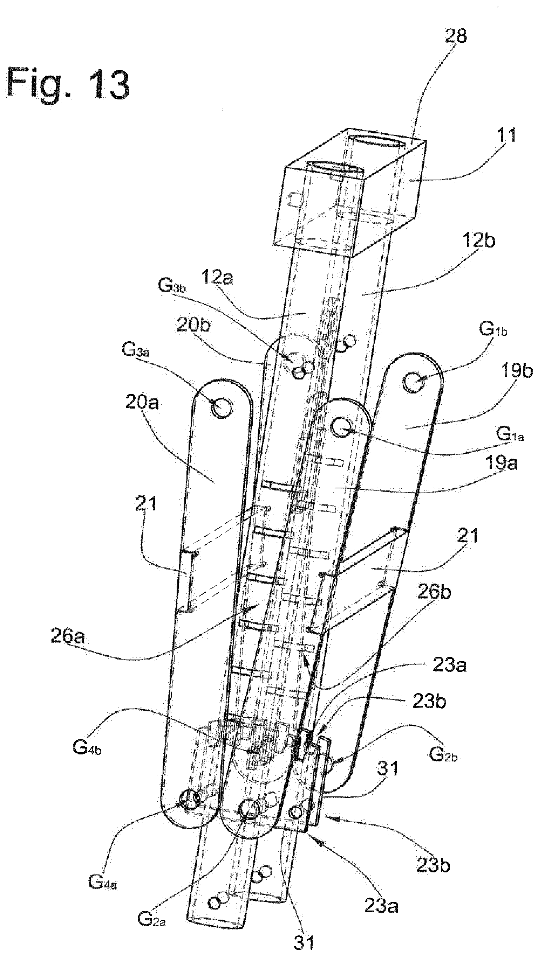

Z.B. in Fig. 11 ist erkennbar, dass der Abstand I1 zwischen den Gelenken G1b und G3b größer ist als der Abstand I2 zwischen den Gelenken G2b und G4b. Die Viergelenke 27a und 27b sind als Trapezviergelenke ausgebildet. Auf diese Weise wird das erste Halteelement 16 bei der Bewegung der Getriebevorrichtung 18 zwischen der hinteren Position in die vordere Position in Richtung x1 oder x2 bewegt und geneigt (vgl. die Fig. 6 und 7). In den Fig. 1, 3, 5, 6, 7 und 11 ist die Getriebevorrichtung 18 in der mittleren Position angeordnet und in den Fig. 2, 4, 8, 9, 12 und 13 ist die Getriebevorrichtung 18 in einer vorderen Position angeordnet. In Fig. 10 sind eine hintere Position, die mittlere Position und die vordere Position der Getriebevorrichtung 18 dargestellt.

Eine Längsmittellinie m1 der Tragstangen 12a und 12b fällt mit einer Längsmittellinie der Aussparungen 32 zusammen. Eine Momentandrehachse a der Getriebevorrichtung 18 (siehe Fig. 10) wird durch den Schnittpunkt von Mittellinien m2 und m3 durch das obere Gelenk und das untere Gelenk jedes Lenkers 19a und 20a sowie 19b und 20b gebildet. Bei der Bewegung zwischen der vorderen und der hinteren Position werden die Tragstangen 12a und 12b in Richtung u1 bzw. u2 geschwenkt, wobei das Kopfanlageteil 11 in die Richtungen x1 bzw. x2 verlagert wird. Die Getriebevorrichtung 18 kann z.B. durch eine Rückstellvorrichtung, wie z.B. eine Feder in die vordere Position oder in die hintere Position belastet sein.

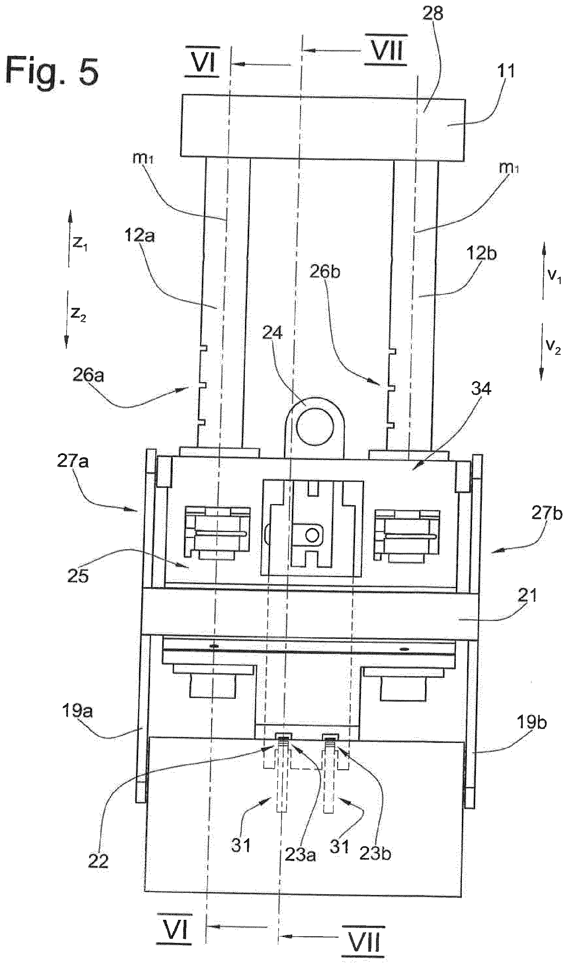

Die Getriebevorrichtung 18 weist eine Verriegelungsvorrichtung 22 auf. Die Verriegelungsvorrichtung 22 umfasst fest mit dem zweiten Halteelement 17 verbundene Widerlagerelemente 31 mit Verzahnungen 23a und 23b (siehe z.B. die Fig. 5, 7 und 9), die mit einem Riegel 24 zusammenwirken, der an dem ersten Halteelement 16 gehalten ist. Der Riegel 24 ist in dem ersten Halteelement 16 in Richtungen v1 und v2 zwischen einer Löseposition und einer Riegelposition bewegbar gelagert.

Ein nicht dargestelltes Bedienelement für den Riegel 24 könnte z.B. an dem Kopfanlageteil 11 angeordnet sein. Wenn dieses - wie in dem vorliegenden Ausführungsbeispiel - mit einer Höhenverstellung in die Richtungen z1 und z2 bewegbar ist, könnte eine Entriegelungsbewegung des Bedienelementes mittels eines Koppelungsgliedes von dem Bedienelement auf den Riegel 24 übertragen werden. Gemäß einer Alternative könnte das Bedienelement aber auch an der Getriebevorrichtung angeordnet sein.

Die Richtungen v1 und v2 sind fest dem ersten Halteelement 16 zugeordnet. Sie bewegen sich also mit dem ersten Halteelement 16 in den unterschiedlichen Positionen der Getriebevorrichtung 16. In der Riegelposition ist der Riegel 24 mit den Verzahnungen 23a und 23b in Eingriff. Eine Bewegung der Getriebevorrichtung 18 zwischen der vorderen Position und der hinteren Position ist in der Riegelposition nicht möglich.

In der Löseposition (nicht dargestellt) ist der Riegel 24 außer Eingriff mit den Verzahnungen 23a und 23b. Das erste Halteelement 16 kann zwischen der vorderen Position und der hinteren Position bewegt werden. Der Riegel 24 ist z.B. von einem Rückstellelement (nicht dargestellt) in Richtung v2 in die Riegelposition belastet. Aus der Riegelposition kann der Benutzer den Riegel 24 durch Verlagerung in Richtung v1 in die Löseposition bewegen. Die Verstellung der Verriegelungsvorrichtung zwischen der Riegelposition und der Löseposition und / oder die Verstellung der Getriebevorrichtung zwischen der hinteren Position und der vorderen Position kann mittels wenigstens eines elektrischen Antriebs automatisch erfolgen.

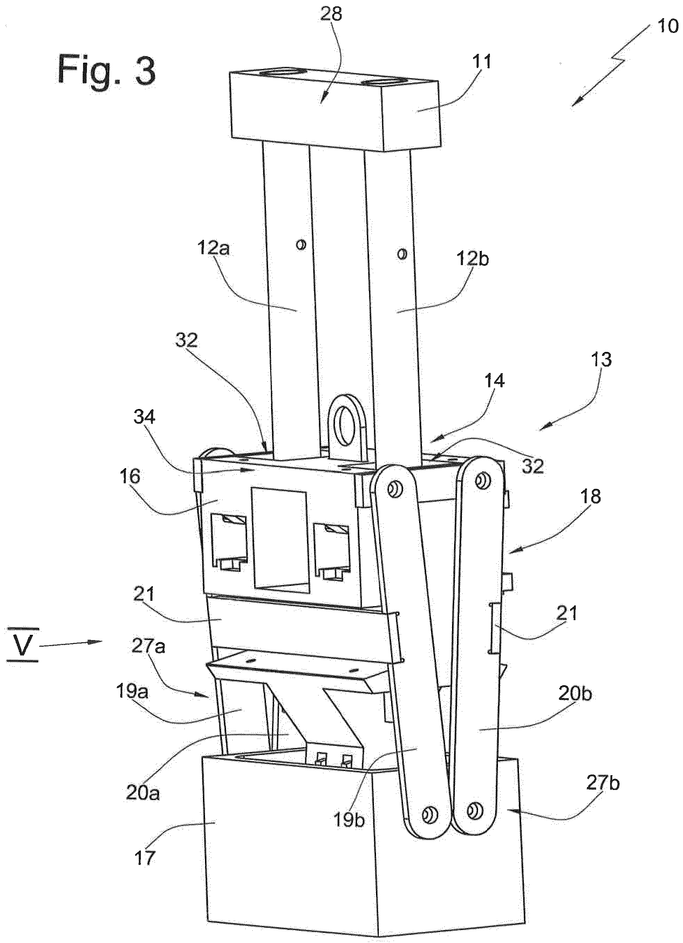

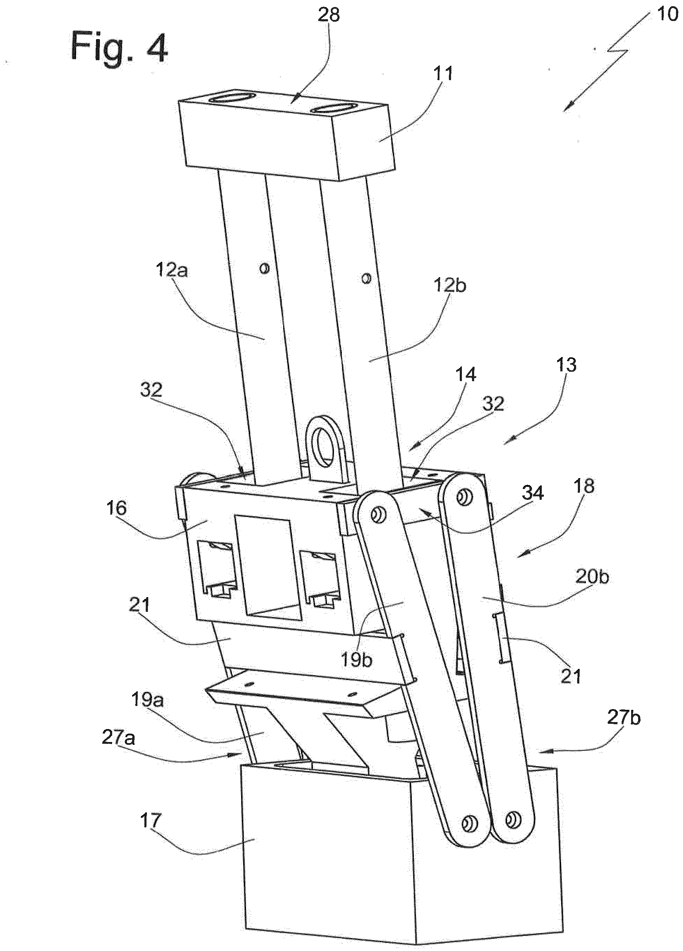

Unabhängig von der Position der Getriebevorrichtung 18 sind die Tragstangen 12a und 12b mit der Höhenverstellvorrichtung 14 relativ zu dem ersten Halteelement 16 in die Richtungen v1 oder v2 zwischen der z.B. in den Fig. 1 und 2 dargestellten unteren Position und der in den Fig. 3 und 4 dargestellten oberen Position verstellbar. In der mittleren Position der Getriebevorrichtung 18 fallen die Bewegungsrichtungen v1 und v2 mit den Richtungen z1 und z2 zusammen. Weil das obere Halteelement 16 bei der Bewegung der Getriebevorrichtung 18 zwischen der hinteren Position und der vorderen Position unterschiedliche Neigungsstellungen einnimmt, weichen in von der mittleren Position abweichenden Positionen die Bewegungsrichtungen v1 und v2 sowie die Bewegungsrichtungen z1 und z2 voneinander ab.

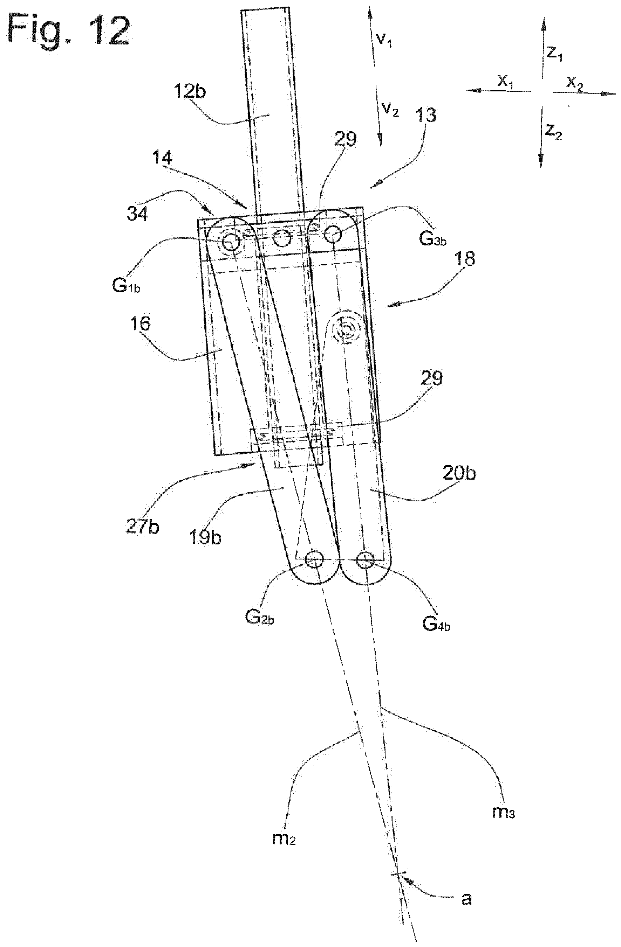

Bei ihrer Bewegung werden die Tragstangen 12a und 12b von Führungen 29 geführt, die in Aussparungen 32 des ersten Halteelements 16 ausgebildet sind (siehe die Fig. 11 und 12). Mittels einer Arretiervorrichtung 25 können die Tragstangen 12a und 12b in der eingestellten Höhenposition arretiert werden.

Die Arretiervorrichtung 25 umfasst eine an jeder der Tragstangen 12a und 12b ausgebildete Anordnung 26a und 26b von Kerben 33 sowie ein Arretierelement 30, das fest in dem ersten Halteelement 16 aufgenommen ist und welches mit einer der Kerben der Anordnungen 26a und 26b lösbar in Eingriff gebracht werden kann. In einer Arretierposition der Arretiervorrichtung 25 ist das Arretierelement 30 mit einer der Kerben in Eingriff und das Kopfanlageteil 11 ist in der eingestellten Höhenposition bezüglich wenigstens einer der Bewegungsrichtungen v1 und v2 arretiert. In einer Verstellposition ist jedes Arretierelement außer Eingriff mit den Kerben. Das Kopfanlageteil 11 ist dann - unabhängig von der Position der Getriebevorrichtung 18 - in die Richtungen v1 und v2 bewegbar.

Das Verstellen der Arretiervorrichtung 25 zwischen der Arretierposition und der Verstellposition sowie die Verlagerung der Tragstangen 12a und 12b zwischen der unteren Position und der oberen Position kann mittels wenigstens eines elektrischen Antriebs erfolgen.

## Patentansprüche

1. Kopfstütze für einen Sitz, insbesondere für einen Fahrzeugsitz, mit einem Kopfanlageteil (11), welches mittels einer Lagervorrichtung (13) an einem Fahrzeugsitz lagerbar ist, wobei die Lagervorrichtung (13) eine Getriebevorrichtung (18) mit einem dem Kopfanlageteil (11) zugeordneten ersten Halteelement (16) sowie einem sitzteilfesten zweiten Halteelement (17) umfasst, wobei das erste Halteelement (16) und das zweite Halteelement (17) derart durch Lenker (19a, 19b, 20a, 20b) miteinander verbunden sind, dass wenigstens ein Viergelenk (27a, 27b) gebildet ist, mittels welchem das Kopfanlageteil (13) relativ zu dem Fahrzeugsitz (15) zwischen einer zu dem Kopf eines Sitzinsassen nach vorne bewegten vorderen Position und einer zurückbewegten hinteren Position bewegbar ist, **dadurch gekennzeichnet**, das Kopfanlageteil (11) mit einer Höhenverstellvorrichtung (14) relativ zu dem Fahrzeugsitz (15) zwischen einer oberen Position und einer unteren Position bewegbar ist, wobei die Höhenverstellvorrichtung (14) wenigstens eine mit dem Kopfanlageteil (11) verbundene Tragstange (12a, 12b) und wenigstens eine dem ersten Halteelement (26) zugeordnete Führung (29) für die Lagerung und Führung der Tragstange (12a, 12b) umfasst.

2. Kopfstütze nach Anspruch 1, **dadurch gekennzeichnet, dass** jedes Viergelenk (27a, 27b) einen ersten Lenker (19a, 19b) und einen zweiten Lenker (20a, 20b) umfasst, wobei jeder Lenker mit dem ersten Halteelement (16) und mit dem zweiten Halteelement (17) ein Gelenk (G1a, G2a, G3a, G4a, G1b, G2b, G3b, G4b) bildet.

3. Kopfstütze nach einem der vorangehenden Ansprüche, **dadurch gekennzeichnet, dass** das Viergelenk (27a, 27b) als Trapezviergelenk ausgebildet ist.

4. Kopfstütze nach einem der vorangehenden Ansprüche, **dadurch gekennzeichnet, dass** der Abstand (I1) von zwei an dem ersten Halteelement (16) ausgebildeten oberen Gelenken (G1a, G3a, G1b, G3b) größer ist als der Abstand (I2) von zwei an dem zweiten Halteelement (17) ausgebildeten unteren Gelenken (G2a, G4a, G2b, G4b).

5. Kopfstütze nach einem der vorangehenden Ansprüche, **dadurch gekennzeichnet, dass** das erste Halteelement (16) und das zweite Halteelement (17) Teil des ersten Viergelenks (27a) sowie des zweiten Viergelenks (27b) sind.

6. Kopfstütze nach einem der vorangehenden Ansprüche, **dadurch gekennzeichnet, dass** eine Verriegelungsvorrichtung (22) vorgesehen ist, mittels welcher das erste Halteelement (16) bei der Bewegung zwischen der vorderen Position und der hinteren Position in unterschiedlichen Positionen arretierbar ist.

7. Kopfstütze nach einem der vorangehenden Ansprüche, **dadurch gekennzeichnet, dass** eine Arretiervorrichtung (25) vorgesehen ist, mittels welcher das Kopfanlageteil (11) relativ zu dem Fahrzeugsitz (15) in unterschiedlichen Höhenpositionen arretierbar ist.

8. Kopfstütze nach Anspruch 7, **dadurch gekennzeichnet, dass** die Arretiervorrichtung (25) dem ersten Halteelement (16) zugeordnete Arretiermittel sowie dem Kopfanlageteil (11) zugeordnete Arretiermittel aufweist, wobei die Arretiermittel lösbar in Eingriff bringbar sind.

## Claims

1. A headrest for a seat, in particular for a vehicle seat, comprising a head support part (11), which can be supported on a vehicle seat by a mounting assembly (13), wherein the mounting assembly (13) comprises a linkage (18) comprising a first holding element (16), assigned to the head support part (11), and a second holding element (17), fixed to the seat part, wherein the first holding element (16) and the second holding element (17) are connected to one another by means of links (19a, 19b, 20a, 20b) in such a way that at least one four-pivot linkage (27a, 27b) is formed by means of which the head support part (13) can be adjusted relative to the vehicle seat (15) between a front position moved forward toward the head of a seat occupant, and a rear position moved backward, **characterized in that** the head support part (11) can be moved relative to the vehicle seat (15) between an upper position and a lower position by a height-adjusting device (14), whereby the height-adjusting device (14) comprises at least one support rod (12a, 12b) connected to the head support part (11), and at least one link (29), which is assigned to the first holding element (26), for storing and guiding the support bar (12a, 12b).

2. The headrest according to claim 1, **characterized in that** each four-pivot linkage (27a, 27b) comprises a first link (19a, 19b) and a second link (20a, 20b), wherein each link forms a pivot (G1a, G2a, G3a, G4a, G1b, G2b, G3b, G4b) with the first holding element (16) and with the second holding element (17).

3. The headrest according to one of the preceding claims, **characterized in that** the four-pivot linkage (27a, 27b) is a trapezoid four-pivot linkage.

4. The headrest according to one of the preceding claims, **characterized in that** the spacing (I1) between two upper pivots (G1a, G3a, G1b, G3b), formed on the first holding element (16), is larger than the spacing (12) between two lower pivots (G2a, G4a, G2b, G4b), formed on the second holding element (17).

5. The headrest according to one of the preceding claims, **characterized in that** the first holding element (16) and the second holding element (17) are part of the first four-pivot linkage (27a) as well as of the second four-pivot linkage (27b).

6. The headrest according to one of the preceding claims, **characterized in that** the first holding element (16) can be latched in different positions of the movement between the front position and the rear position, by means of a latching device.

7. The headrest according to one of the preceding claims, **characterized in that** a the head support part (11) can be latched relative to the vehicle seat (15) in different height positions by means of a locking mechanism (25).

8. The headrest according to claim 7, **characterized in that** the locking mechanism (25) has locking means that are assigned to the first holding element (16), as well as locking means that are assigned to the head support part (11), wherein the locking means can be releasably engaged.

## Revendications

1. Appuie-tête destiné à un siège, en particulier à un siège de véhicule, avec une partie repose-tête (11), qui peut être posé sur un siège de véhicule au moyen d'un dispositif de support (13), dans lequel le dispositif de support (13) comprend un dispositif de transmission (18) avec un premier élément de maintien (16) associé à la partie repose-tête (11) ainsi qu'un deuxième élément de maintien (17) fixé sur la partie siège, dans lequel le premier élément de maintien (16) et le deuxième élément de maintien (17) sont reliés entre eux par des guides (19a, 19b, 20a, 20b) de sorte à former au moins un quadrilatère articulé (27a, 27b) au moyen duquel la partie repose-tête (13) est mobile par rapport au siège de véhicule (15) entre une position avant avancée vers la tête d'un occupant du siège et une position arrière reculée, **caractérisé en ce que** la partie repose-tête (11) peut être déplacée avec un dispositif de réglage en hauteur (14) par rapport au siège de véhicule (15) entre une position haute et une position basse, le dispositif de réglage en hauteur (14) comprenant au moins une barre de support (12a, 12b) reliée avec la partie repose-tête (11) et au moins un guide (29) associé au premier élément de maintien (26) pour poser et guider la barre de support (12a, 12b).

2. Appuie-tête selon la revendication 1, **caractérisé en ce que** chaque quadrilatère articulé (27a, 27b) comprend un premier guide (19a, 19b) et un deuxième guide (20a, 20b), chaque guide formant avec le premier élément de maintien (16) et avec le deuxième élément de maintien (17) une articulation (G1a, G2a, G3a, G4a, G1b, G2b, G3b, G4b).

3. Appuie-tête selon une des revendications précédentes, **caractérisé en ce que** le quadrilatère articulé (27a, 27b) est configuré comme un trapèze articulé.

4. Appuie-tête selon une des revendications précédentes, **caractérisé en ce que** la distance (I1) de deux articulations supérieures (G1a, G3a, G1b, G3b) formées sur le premier élément de maintien (16) est supérieure à la distance (I2) de deux articulations inférieures (G2a, G4a, G2b, G4b) formées sur le deuxième élément de maintien (17).

5. Appuie-tête selon une des revendications précédentes, **caractérisé en ce que** le premier élément de maintien (16) et le deuxième élément de maintien (17) font partie du premier quadrilatère articulé (27a) ainsi que du deuxième quadrilatère articulé (27b).

6. Appuie-tête selon une des revendications précédentes, **caractérisé en ce qu'**il est prévu un dispositif de verrouillage (22) au moyen duquel le premier élément de maintien (16) peut être bloqué dans différentes positions lors du mouvement entre la position avant et la position arrière.

7. Appuie-tête selon une des revendications précédentes, **caractérisé en ce qu'**il est prévu un dispositif de blocage (25) au moyen duquel la partie repose-tête (11) peut être bloquée dans différentes positions en hauteur par rapport au siège de véhicule (15).

8. Appuie-tête selon la revendication 7, **caractérisé en ce que** le dispositif de blocage (25) présente des moyens de blocage associés au premier élément de maintien (16) ainsi que des moyens de blocage associés à la partie repose-tête (11), les moyens de blocage pouvant être mis en prise de façon détachable.
